# EUROPEAN PATENT SPECIFICATION

(11) **EP 3 058 199 B1**
(45) Date of publication and mention of the grant of the patent: **30.06.2021**
(21) Application number: 14853568.5
(22) Date of filing: 23.05.2014
(51) Int. Cl.: F02C 7/05, F02C 7/045, F02K 1/82, B29D 7/00, B29C 43/32, B29C 67/02, B29C 33/02, B29C 33/38, B29C 70/06, B29C 70/14, B29C 70/46, B29C 70/12, F01D 21/04, B29D 24/00, F01D 25/00, F02C 3/04, F02C 7/047

(54) **COMPRESSION MOLDED FIBER REINFORCED FAN CASE ICE PANEL**
FORMGEPRESSTE FASERVERSTÄRKTE EISBESTÄNDIGE PLATTE FÜR VENTILATORGEHÄUSE
PANNEAU RÉSISTANT AUX IMPACTS DE GLACE POUR CARTER DE SOUFFLANTE RENFORCÉ PAR DES FIBRES MOULÉES PAR COMPRESSION

(30) Priority: 15.10.2013 US 201361890950 P
(43) Date of publication of application: 24.08.2016
(73) Proprietor: Raytheon Technologies Corporation, Farmington, CT 06032 (US)
(72) Inventor: CLARKSON, Steven, Cheshire, CT 06410 (US); ROBERTSON, Thomas J., Glastonbury, CT 06033 (US)
(74) Representative: Dehns
(86) International application number: PCT/US2014/039309
(87) International publication number: WO 2015/057270

(56) References cited:
- EP-A1- 0 916 477
- US-A- 4 699 567
- US-A- 5 160 248
- US-A- 5 344 280
- US-A1- 2005 226 714
- US-A1- 2006 125 156
- US-A1- 2009 110 538
- US-A1- 2011 052 383
- US-A1- 2013 101 406
- None

## Description

### Field of Disclosure

The present disclosure generally relates to gas turbine engines, and more specifically, relates to an impact-resistant ice panel for gas turbine engine fan cases and a method of producing the same.

### Background

Gas turbine engines, such as those used to provide thrust for an aircraft, typically include a fan surrounded by a fan case, a compressor section, a combustor or combustors, and a turbine section, each positioned sequentially in an upstream to downstream arrangement. In operation, air may be drawn into the engine and accelerated by the fan, and a fraction of the indrawn air may be directed through the compressor section, the combustor(s), and the turbine section. This air may first be pressurized in the compressor section and it may then be mixed with fuel and combusted in the combustor(s) to generate hot combustion gases. The hot combustion gases may subsequently expand through and drive the turbine section or sections which may, in turn, drive the compressor section or sections and the fan as all are mounted on one or more interconnecting shafts. After passing through the turbine section(s), the air may be exhausted through an exhaust nozzle to provide propulsive thrust to an associated aircraft or to provide power if used in land-based operations.

During operation, certain environmental conditions (e.g., high altitude, etc.), may cause ice to accumulate on the blades of the fan. When the ice reaches a certain size, it may be thrown radially outwardly off of the rotating fan blades and in a direction aft (or downstream) of the fan due to a combination of centrifugal force and airflow force. The released ice may then impinge upon an exposed inner flow path surface of the fan case known as the "ice impact zone". In order to prevent the released ice from damaging the fan case, the "ice impact zone" may be covered with an impact-resistant ice panel which may be constructed of a material that is capable of deflecting the ice. The ice panel may consist of an underlying honeycomb core bonded to an exposed impact-resistant facesheet which may be formed from a lightweight and high-strength composite laminate. For example, the facesheet may consist of several layers (or plies) of cured "prepreg", each consisting of a fiber reinforcement pre-impregnated with a resin matrix.

Current composite constructions for ice panel facesheets typically utilize a woven fabric of continuous fibers as the fiber reinforcement. For example, as described in U.S. Patent Number 5,344,280, an ice panel facesheet may be formed from multiple plies of cured woven fiberglass in an epoxy resin matrix. Another common facesheet construction consists of multiple plies of cured pregpreg fabric, each consisting of woven aramid continuous fibers, such as Kevlar® yarn, in an epoxy resin matrix. However, while ice panel facesheets formed from woven aramid fiber/epoxy resin are effective at resisting damage, they may be time consuming and expensive to manufacture. In particular, because prepreg fabric formed from woven aramid fiber/epoxy resin may be relatively thin (about 0.2 mm to about 0.4 mm), the prepreg layup process may involve the manual (or automated) layup of as many as 25 layers of fabric or more to achieve a desired facesheet thickness. In addition, in order to allocate fiber reinforcement in multiple directions in the plane of the facesheet, the prepreg layup process may also involve the manual (or automatic) orientation of each layer of prepreg fabric in a different direction. Furthermore, because autoclaving is traditionally employed for curing plies of prepreg fabric, the removal of entrapped air after the layup of every few prepreg fabric plies may be necessary in some cases. Moreover, the woven aramid fiber/epoxy resin material may be expensive and material utilization may be less than optimal, as the autoclaving process typically involves the subsequent trimming and disposal of excess material.

Clearly, there is a need for more efficient and cost-effective approaches for the fabrication of high-performance ice panel facesheets for gas turbine engine fan cases.

US 2006/125156 discloses a method of producing composite materials with a laminate construction wherein a plurality of patches of a unidirectional fabric treated with a resin are layered in a random orientation and then compressed and cured to form the laminate.

US 5160248 discloses a fan case liner for a gas turbine engine having a foreign body impact resistant area comprising a face sheet and two layers of a honeycombed material.

EP 0916477 discloses a method of molding a composite material part formed of chopped nonwoven composite ply having reinforcing fibers extending substantially parallel to each other. The composite ply elements are entangled to form an entangled composite structure before being compressed and molded.

US 2013/0101406 discloses a composite outlet guide vane having a central airfoil portion formed of unidirectional fibers, and end portions comprising randomly oriented segments of unidirectional tape.

### SUMMARY

The present invention relates to an ice panel for a fan case of a gas turbine engine according to claim 1 and a method of producing the same according to claim 15.

In another refinement, the chopped prepreg tape may be cured by compression molding.

In another refinement, the facesheet may comprise a plurality of plies of the chopped prepreg tape.

In another refinement, the plurality of plies may further comprise at least one ply of a prepreg fabric.

In another refinement, the prepreg fabric may comprise continuous woven aramid fibers in an epoxy resin.

In another refinement, the chopped prepreg tape may have a thickness of at least about 0.5 mm.

In another refinement, the fibers in the chopped prepreg tape may be non-continuous unidirectional fibers.

In another refinement, the non-continuous unidirectional fibers may be carbon fibers.

In another refinement, the non-continuous unidirectional fibers may comprise fibers selected from the group consisting of carbon fibers, glass fibers, aramid fibers, boron fibers, ceramic fibers, and polymeric fibers.

In another refinement, the resin matrix in the chopped prepreg tape may be a thermoset resin.

In another refinement, the thermoset resin may be an epoxy resin.

In another refinement, the ice panel may further comprise a honeycomb core beneath the facesheet, and the honeycomb core and the facesheet may be bonded to the inner surface of the fan case with an adhesive.

In accordance with another aspect of the present disclosure, a gas turbine engine is disclosed. The gas turbine engine comprises a fan, a fan case surrounding the fan, a compressor section located downstream of the fan, a combustor located downstream of the compressor section, and a turbine section located downstream of the combustor. The gas turbine engine further comprises an ice panel according to the invention located aft of the fan on an exposed inner surface of the fan case.

In another refinement, the chopped prepreg tape may be cured by compression molding.

In another refinement, the facesheet may comprise a plurality of plies of the chopped prepreg tape.

In another refinement, the plurality of plies may further comprise at least one ply of a prepreg fabric.

In another refinement, the fibers in the chopped prepreg tape may comprise non-continuous unidirectional fibers.

In another refinement, the non-continuous unidirectional fibers may comprise fibers selected from the group consisting of carbon fibers, glass fibers, aramid fibers, boron fibers, ceramic fibers, and polymeric fibers.

These and other aspects and features of the present disclosure will be more readily understood when read in conjunction with the accompanying drawings.

### BRIEF DESCRIPTION OF THE DRAWINGS

FIG. 1 is a cross-sectional view of a gas turbine engine having a fan case and an ice panel on an inner surface of the fan case, constructed in accordance with the present disclosure.
FIG. 2 is a cross-sectional view of the fan case and the ice panel of FIG. 1 shown in isolation.
FIG. 3 is a top perspective view of a chopped prepreg tape, constructed in accordance with the present disclosure.
FIG. 4 is a perspective view of a rolled-up sheet of the chopped prepreg tape of FIG. 3, constructed in accordance with the present disclosure.
FIG. 5 is a flowchart depicting a sequence of steps which may be involved in fabricating the chopped prepreg tape, in accordance with a method of the present disclosure.
FIG. 6 is a flowchart depicting a sequence of steps which may be involved in fabricating a facesheet of the ice panel from the chopped prepreg tape, in accordance with a method of the present disclosure.
FIG. 7 is a schematic illustration of some of the steps of FIG. 6.
FIG. 8 is a flowchart depicting a sequence of steps for fabricating an ice panel facesheet according to current methods (prior art).

It should be understood that the drawings are not necessarily drawn to scale and that the disclosed embodiments are sometimes illustrated diagrammatically and in partial views. In certain instances, details which are not necessary for an understanding of this disclosure or which render other details difficult to perceive may have been omitted. It should be understood, of course, that this disclosure is not limited to the particular embodiments disclosed herein and that the invention is defined by the appended claims.

### DETAILED DESCRIPTION

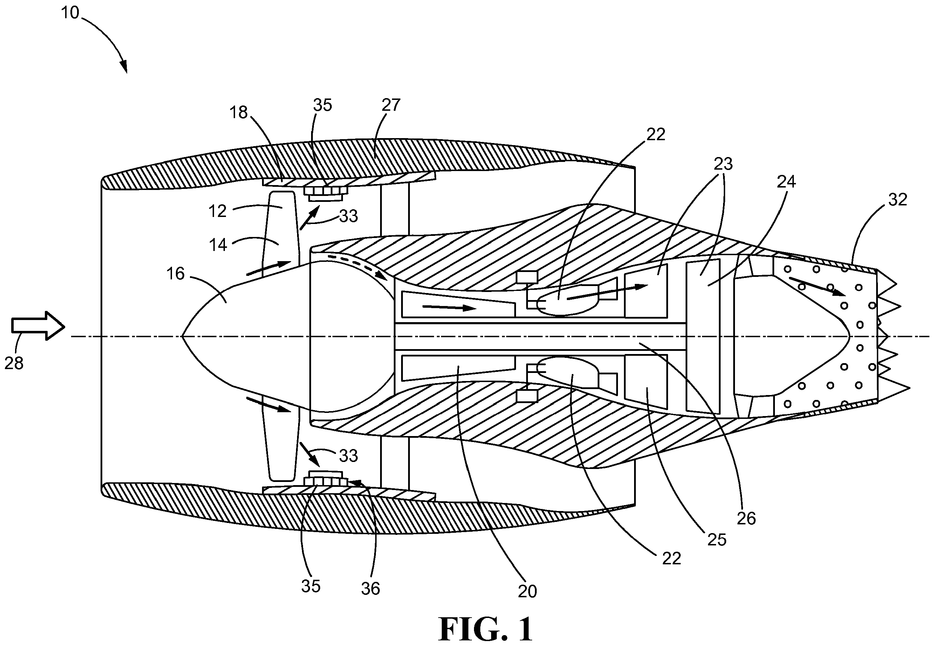

Referring now to the drawings, and with specific reference to FIG. 1, a gas turbine engine 10 in accordance with the present disclosure is depicted. The gas turbine engine 10 may be effective for powering an associated aircraft or for otherwise providing power if used in land-based operations. In an upstream to downstream arrangement, the gas turbine engine 10 may consist of: 1) a fan 12 which may consist of a plurality of blades 14 connected to a hub 16 and which may be circumferentially surrounded by a fan case 18, 2) a compressor section 20 (which may include a low pressure compressor and a high pressure compressor), 3) an annular combustor 22 (although a series of circumferentially spaced can combustors may also be used), and 4) a turbine section 23 which may include a low pressure turbine 24 and a high pressure turbine 25 tied to the low pressure compressor and the high pressure compressor, respectively, by one or more concentrically mounted shafts 26. All of the aforementioned parts may then be surrounded by a nacelle 27, as shown.

During normal operation, air 28 may be drawn into the engine 10 and accelerated through the engine 10 by the rotation of the blades 14 of the fan 12. After passing the fan 12, a fraction of the indrawn air may be routed through the compressor section 20, the combustor(s) 22, and the turbine section 23. More specifically, the air 28 may first be compressed and pressurized in the compressor section 20, and it may then enter the combustor 22 where it may be mixed with fuel and combusted to generate hot combustion gases. The hot combustion gases may then expand through and drive the rotation of the turbine section 23 which may, in turn, drive the rotation of the compressor section 20 and the fan 12 by driving the rotation of the interconnecting shaft(s) 26. The gases may then be exhausted through an exhaust nozzle 32 to provide propulsive thrust to an associated aircraft or to otherwise provide power for other applications.

Under certain environmental conditions, such as high altitude, ice may accumulate on the blades 14 of the fan 12 and, once the ice accumulates to a sufficient level, it may be shed radially outwardly and aft of the fan 12 as shown by direction 33 due to a combination of centrifugal force (caused by the rotation of the blades 14) as well as the force of the airflow acting upon it. The released ice may then impinge upon an ice impact zone 35 of the fan case 18. The impact zone 35 may be an inner surface of the fan case 18 that is susceptible to damage from ice impact and it may be located aft (or downstream) of the fan 12, as best shown in FIG. 1.

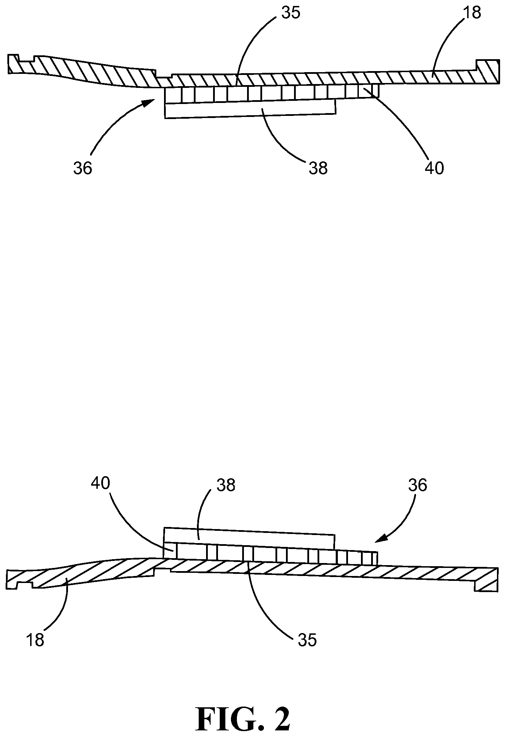

In order to prevent the released ice from damaging the fan case 18, the impact zone 35 is covered with an impact-resistant ice panel 36, as best shown in FIG. 2. The ice panel 36 may be annular in shape and comprises an impact-resistant facesheet 38 and an underlying honeycomb core 40. The facesheet 38 and the honeycomb core 40 may be bonded to an inner surface of the fan case 18 with a suitable adhesive to form a sandwich-like structure, as shown.

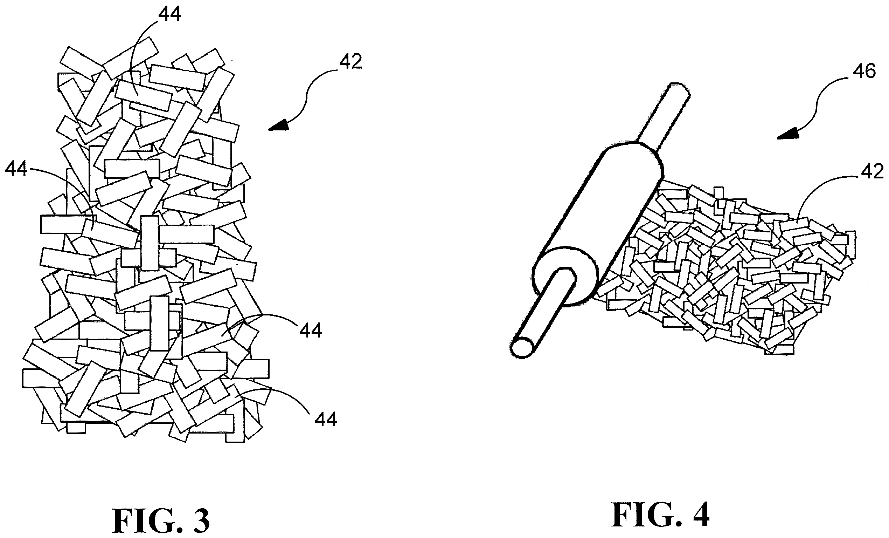

The facesheet 38 of the present disclosure may be formed from one or more layers (or plies) of a chopped prepreg tape 42 (see FIG. 3) that is shaped and cured by compression molding or another suitable method. As an alternative arrangement, the facesheet 38 may be formed from one or more plies of the chopped prepreg tape 42 and one or more plies of a prepreg fabric, such as woven aramid fiber/epoxy resin prepreg tape or another type of prepreg fabric. As detailed below, the use of the chopped prepreg tape 42 for forming the facesheet 38 offers a number of manufacturing advantages over current methods and materials for ice panel facesheets, without significantly compromising the performance of the facesheet 38. Such manufacturing advantages may include increased ease of production, increased production rates, increased material utilization (i.e., reduced waste), and reduced production costs.

As shown in FIG. 3, the chopped prepreg tape 42 consists of a plurality of randomly oriented chips 44 and each chip 44 consists of a fiber reinforcement impregnated with a resin matrix. Each of the chips 44 in the chopped prepreg tape 42 may have a length of about 200 mm and a width of about 50 mm, or other dimensions, and they may lay relatively flat to form a mat-like structure, as shown. According to one arrangement, the fiber reinforcement in the chips 44 may be non-continuous unidirectional (i.e., aligned in parallel) fibers, although they may be non-continuous woven fibers or non-continuous randomly oriented fibers in some circumstances. "Non-continuous fibers", according to the present disclosure, may refer to short fibers having an aspect ratio (ratio of fiber length to fiber diameter) of less than about 200.

The non-continuous fibers in the chips 44 may be carbon fibers or other types of fibers such as, but not limited to, glass fibers, aramid fibers, polymeric fibers, boron fibers, and ceramic fibers. The resin matrix in the chips 44 may be a thermoset resin such as an epoxy resin, but bismaleimide (BMI) and phenolic resin are other non-limiting possibilities. Alternatively, the resin matrix may be a thermoplastic resin such as, but not limited to, polyetherimide (PEI) and polyether ether ketone (PEEK). In addition, the fiber content in the resin matrix may be in the range of about 40% to about 60% by volume, but may also deviate from this range depending on a number of factors. Prior to curing, the resin matrix in the chopped prepreg tape 42 may exist in a partially cured state such that it may be sufficiently pliable and tacky to be bent, cut, and layered/stacked. Furthermore, due to the random orientation of the chips 44 (and, therefore the fibers) in the chopped prepreg tape 42, the strength of the chopped prepreg tape 42 may be at least approximately the same in all directions in the plane of the chopped prepreg tape 42.

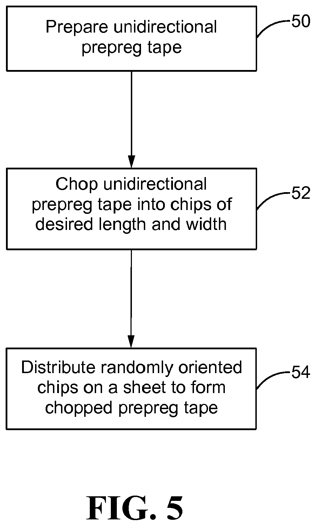

As shown in FIG. 4, the chopped prepreg tape 42 may be provided as a rolled-up sheet 46 with a sheet thickness of between about 0.5 mm to about 3 mm, although other sheet thicknesses are also possible. Furthermore, in some circumstances, the chopped prepreg tape 42 may be provided in bulk form (i.e., as loose chips 44), rather than as a sheet. In any event, the chopped prepreg tape 42 may be commercially available as chopped prepreg material sold under the trade name HexMC® from Hexcel Corporation, or it may be purchased as another type of chopped prepreg material from Hexcel Corporation or another commercial source. Alternatively, it may be fabricated by various possible methods, such as the method depicted in FIG. 5. In particular, FIG. 5 shows a series of possible steps for fabricating the chopped prepreg tape 42 having chips 44 consisting of unidirectional non-continuous fibers. As shown by a first block 50, the method may first involve preparing unidirectional prepreg tape having continuous fibers (i.e., long fibers having an aspect ratio of about 200 or more) aligned parallel and embedded in a desired resin matrix, as will be understood by those with ordinary skill in the art. Alternatively, the unidirectional prepreg tape may be purchased from a commercial supplier. The unidirectional prepreg tape may then be chopped into pieces of a desired length and width to provide the chips 44 having unidirectional non-continuous fibers, according to a block 52. According to a next block 54, the chips 44 may then be distributed in a random orientation on a sheet to provide the chopped prepreg tape 42. Notably, the randomly distributed chips 44 may spontaneously bond together on the sheet due to the adhesive properties/stickiness of the partially cured resin matrix. Optionally, the resulting chopped prepreg tape 42 may then be rolled up as a rolled-up sheet, if desired.

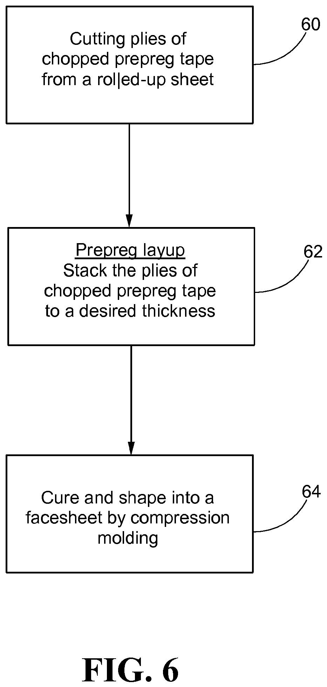

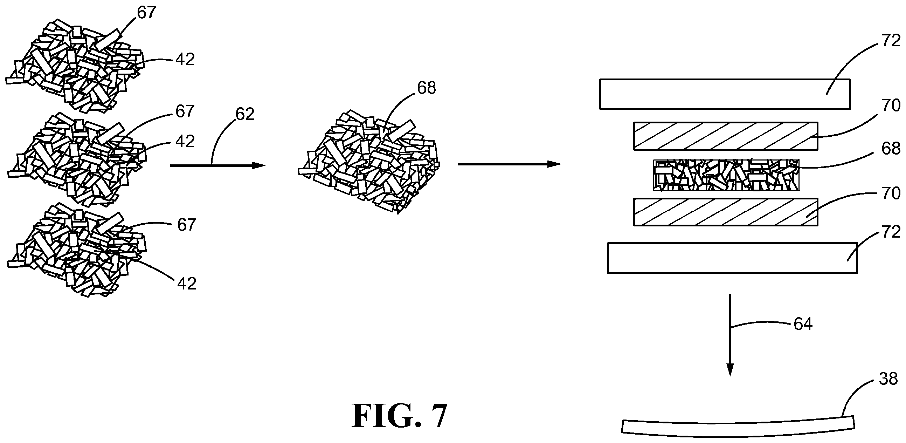

Referring now to FIGs. 6 and 7, a method for fabricating the facesheet 38 using the chopped prepreg tape 42 is depicted. Beginning with a first block 60, plies 67 (or layers) of the chopped prepreg tape 42 having desired dimensions may be cut from the rolled-up sheet 46 or from another stock material. Alternatively, the plies 67 may be purchased in a pre-cut form in desired dimensions from a commercial supplier. According to a next block 62, the plies 67 may be stacked to a desired thickness according to a manual or automated prepreg layup process to provide a pre-mold stack 68, as will be apparent to those skilled in the art. If desired, one or more plies of prepreg fabric, such as woven aramid fiber/epoxy resin prepregs or another type of prepreg fabric, may be incorporated into the pre-mold stack 68 during the block 62.

Importantly, because the chopped prepreg tape 42 may be much thicker than traditional prepreg fabric (i.e., woven aramid/epoxy resin prepreg), substantially fewer plies 67 of the chopped prepreg tape 42 may be required to achieve a given facesheet thickness. For example, if the chopped prepreg tape 42 is about 1 mm thick, only five plies 67 will be required in the pre-mold stack 68 to achieve a thickness of 5 mm, whereas 25 plies would be required to achieve the same thickness with prepreg fabric having a typical thickness of about 0.2 mm. In this regard, the efficiency of the prepreg layup process may be substantially improved by using the chopped prepreg tape 42. Moreover, unlike conventional prepreg fabric (i.e., woven aramid fiber in epoxy resin), the fiber strength may be the same in every direction in the plane of the chopped prepreg tape 42, such that each ply 67 may not need to be oriented in a different direction during the block 62. This may further improve the ease and efficiency of the prepreg layup process compared with traditional methods (see additional details below).

Following the block 62, the pre-mold stack 68 may be cured and shaped into the facesheet 38 by compression molding, according to a next block 64. More specifically, the block 64 may involve placing the pre-mold stack 68 between two mold surfaces 70 in the shape of the desired facesheet 38 and applying pressure as well as heat from a hot press 72, as schematically depicted in FIG. 7. During compression molding, the pre-mold stack 68 may flow and fill the void between the mold surfaces 70, and the resin matrix may be cured to a solid state. Importantly, the compression molding process may yield a net molded shape, such that trimming of excess material from the resulting facesheet 38 may not be necessary. Accordingly, material utilization may be improved compared with traditional fabrication methods which often involve the trimming of excess material (see additional details below). Furthermore, the compression molding process may assist in removing any entrapped air in the pre-mold stack 68, such that steps involving the removal of entrapped air during the prepreg layup process, as used in traditional facesheet fabrication methods, may be eliminated.

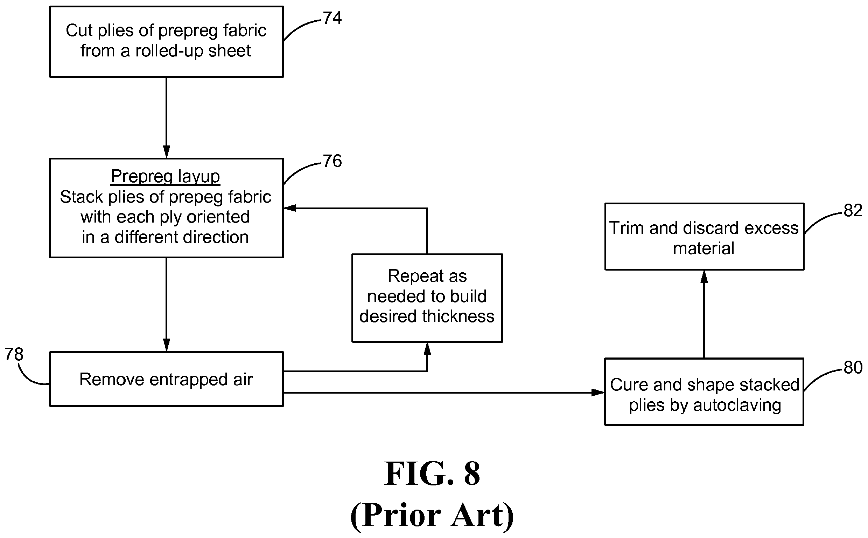

The increased efficiency for ice panel facesheet fabrication according to the methods of the present disclosure may be further appreciated by reference to FIG. 8, which illustrates a series of steps which may be used to fabricate an ice panel facesheet from plies of prepreg fabric (e.g., woven aramid fiber in epoxy resin) by a traditional method (prior art). In particular, the traditional facesheet fabrication process using prepreg fabric may first involve cutting plies of desired dimensions from a stock of the prepreg fabric (e.g, a rolled-up sheet, etc.) (block 74), followed by stacking some of the prepreg plies with each ply being oriented in a different direction to leverage fiber strength in all directions in the plane of the prepreg fabric (block 76). After some of the plies are stacked, entrapped air may be carefully removed from the stack according to a block 78. As shown, blocks 76 and 78 may be repeated as needed to build up the desired thickness of the stack of prepreg fabric plies. Furthermore, as explained above, because the prepreg fabric may be several times thinner than the chopped prepreg tape 42, many more plies may be required to achieve a desired thickness by the traditional fabrication method. Once a desired thickness is achieved, the stacked prepreg fabric plies may be cured and shaped by autoclaving, according to a block 80, as shown. In particular, the autoclaving process may involve positioning the stacked prepreg fabric plies between a mold and a vacuum bag and applying heat, vacuum, and pressure. Following the block 80, excess material may be trimmed and discarded according to the block 82 to provide the final ice panel facesheet.

### Industrial Applicability

In general, it can therefore be seen that the technology disclosed herein may have industrial applicability in a variety of settings including, but not limited to, gas turbine engine construction. The present disclosure introduces a new ice panel for a fan case of a gas turbine engine having a facesheet fabricated from a composite material consisting of cured chopped prepreg tape. As disclosed herein, this material construction provides numerous manufacturing advantages over the traditional composite materials (e.g., woven aramid/epoxy resin composites) such as increased ease and efficiency of production, increased material utilization, and reduced manufacturing costs, without compromising the performance of the resulting facesheet. More specifically, the material construction of the facesheet as disclosed herein may eliminate some cumbersome and/or wasteful steps often used in traditional facesheet fabrication methods, such as the manual or automated orientation of each prepreg layer in a different direction during the prepreg layup process, the removal of entrapped air between prepreg plies during the prepreg layup step, and the trimming of excess material from the facesheet following curing. Furthermore, because the chopped prepreg tape may be several times thicker than traditional prepreg fabrics, the prepreg layup process may be greatly simplified, as fewer prepreg plies may be required to achieve a given facesheet thickness. Moreover, the chopped prepreg tape may be compatible with compression molding which may provide more directional control in the molding process compared with traditional autoclaving processes. It is expected that the technology disclosed herein may find wide industrial applicability in areas such as, but not limited to, aerospace and power generation applications.

## Claims

1. An ice panel (36) for a fan case (18) of a gas turbine engine (10), comprising:
a facesheet (38) and an underlying honeycomb core (40),
**characterized in that** the facesheet (38) is formed of a chopped prepreg tape (42) that is cured, the chopped prepreg tape comprising randomly oriented chips of fibers (44) and a resin matrix impregnated in the randomly oriented chips of fibers.

2. The ice panel (36) of claim 1, wherein the chopped prepreg tape (42) is cured by compression molding.

3. The ice panel (36) of claim 2, wherein the facesheet (38) comprises a plurality of plies (67) of the chopped prepreg tape (42).

4. The ice panel (36) of claim 3, wherein the plurality of plies (67) further comprises at least one ply of a prepreg fabric.

5. The ice panel (36) of claim 4, wherein the prepreg fabric comprises continuous woven aramid fibers in an epoxy resin.

6. The ice panel (36) of claim 3, wherein the chopped prepreg tape (42) has a thickness of at least about 0.5 mm.

7. The ice panel (36) of claim 3, wherein the fibers (44) in the chopped prepreg tape (42) are non-continuous unidirectional fibers.

8. The ice panel (36) of claim 7, wherein the non-continuous unidirectional fibers are carbon fibers.

9. The ice panel (36) of claim 7, wherein the non-continuous unidirectional fibers comprise fibers selected from the group consisting of carbon fibers, glass fibers, aramid fibers, boron fibers, ceramic fibers, and polymeric fibers.

10. The ice panel (36) of claim 7, wherein the resin matrix in the chopped prepreg tape (42) is a thermoset resin.

11. The ice panel (36) of claim 10, wherein the thermoset resin is an epoxy resin.

12. The ice panel (36) of claim 3, wherein the ice panel is located aft of a fan (12) surrounded by the fan case (18) and on an inner surface of the fan case.

13. The ice panel (36) of claim 12, wherein the honeycomb core and the facesheet are bonded to an inner surface of the fan case (18) with an adhesive.

14. A gas turbine engine (10), comprising:
a fan (12);
a fan case (18) surrounding the fan;
a compressor section (20) located downstream of the fan;
a combustor (22) located downstream of the compressor section;
a turbine section (23) located downstream of the combustor; and
an ice panel (36) as claimed in any of claims 1 to 11 or 13 located aft of the fan on an inner surface of the fan case.

15. A method for fabricating an ice panel (36) according to any of claims 1 to 13, the method comprising:
fabricating the facesheet (38) by:
stacking a plurality of plies (67) of a chopped prepreg tape (42) to a desired thickness;
placing the plurality of plies between two mold surfaces; and
curing the plurality of plies into a shape of the facesheet by compression molding; and
forming the ice panel (36) comprising the facesheet and the honeycomb core.

## Patentansprüche

1. Eisbeständige Platte (36) für ein Fan-Gehäuse (18) eines Gasturbinentriebwerks (10), umfassend:
eine Außenschicht (38) und einen darunterliegenden Wabenkern (40),
**dadurch gekennzeichnet, dass** die Außenschicht (38) aus einem gehäckselten Prepreg-Band (42) gebildet ist, welches gehärtet ist, wobei das gehäckselte Prepreg-Band willkürlich ausgerichtete Faserspäne (44) und eine Harzmatrix umfasst, welche die willkürlich ausgerichteten Faserspäne imprägniert.

2. Eisbeständige Platte (36) nach Anspruch 1, wobei das gehäckselte Prepreg-Band (42) durch Formpressen gehärtet wird.

3. Eisbeständige Platte (36) nach Anspruch 2, wobei die Außenschicht (38) eine Vielzahl von Lagen (67) des gehäckselten Prepreg-Bands (42) umfasst.

4. Eisbeständige Platte (36) nach Anspruch 3, wobei die Vielzahl von Lagen (67) ferner mindestens eine Lage eines Prepreg-Materials umfasst.

5. Eisbeständige Platte (36) nach Anspruch 4, wobei das Prepreg-Material durchgehend gewebte Aramidfasern in einem Epoxidharz umfasst.

6. Eisbeständige Platte (36) nach Anspruch 3, wobei das gehäckselte Prepreg-Band (42) eine Dicke von mindestens etwa 0,5 mm aufweist.

7. Eisbeständige Platte (36) nach Anspruch 3, wobei die Fasern (44) des gehäckselten Prepreg-Bands (42) nichtdurchgehende unidirektionale Fasern sind.

8. Eisbeständige Platte (36) nach Anspruch 7, wobei die nichtdurchgehenden unidirektionalen Fasern Kohlenstofffasern sind.

9. Eisbeständige Platte (36) nach Anspruch 7, wobei die nichtdurchgehenden unidirektionalen Fasern Fasern umfassen, welche ausgewählt sind aus der Gruppe bestehend aus Kohlenstofffasern, Glasfasern, Aramidfasern, Borfasern, Keramikfasern und Polymerfasern.

10. Eisbeständige Platte (36) nach Anspruch 7, wobei die Harzmatrix in dem gehäckselten Prepreg-Band (42) ein Duroplastharz ist.

11. Eisbeständige Platte (36) nach Anspruch 10, wobei das Duroplastharz ein Epoxidharz ist.

12. Eisbeständige Platte (36) nach Anspruch 3, wobei sich die eisbeständige Platte hinter einem Fan (12), welcher durch das Fan-Gehäuse (18) umgeben ist, und auf einer inneren Fläche des Fan-Gehäuses befindet.

13. Eisbeständige Platte (36) nach Anspruch 12, wobei der Wabenkern und die Außenschicht mit einem Haftmittel an eine innere Fläche des Fan-Gehäuses (18) gebunden sind.

14. Gasturbinentriebwerk (10), umfassend:
einen Fan (12);
ein Fangehäuse (18), welches den Fan umgibt;
einen Verdichterabschnitt (20), welcher sich stromabwärts von dem Fan befindet;
eine Brennkammer (22), welche sich stromabwärts von dem Verdichterabschnitt befindet;
einen Turbinenabschnitt (23), welcher sich stromabwärts von der Brennkammer befindet; und
eine eisbeständige Platte (36) nach einem der Ansprüche 1 bis 11 oder 13, welche sich hinter dem Fan auf einer inneren Fläche des Fangehäuses befindet.

15. Verfahren zum Herstellen einer eisbeständigen Platte (36) nach einem der Ansprüche 1 bis 13, wobei das Verfahren Folgendes umfasst:
Herstellen der Außenschicht (38) durch:
Stapeln einer Vielzahl von Lagen (67) von gehäckseltem Prepreg-Band (42) zu einer gewünschte Dicke;
Platzieren der Vielzahl von Lagen zwischen zwei Formflächen; und
Härten der Vielzahl von Lagen durch Formpressen in eine Gestalt der Außenschicht; und
Bilden der eisbeständigen Platte (36), welche die Außenschicht und den Wabenkern umfasst.

## Revendications

1. Panneau résistant aux impacts de glace (36) pour carter de soufflante (18) d'un moteur à turbine à gaz (10), comprenant :
une feuille de surface (38) et une âme en nid d'abeille sous-jacente (40),
**caractérisé en ce que** la feuille de surface (38) est formée d'un ruban préimprégné découpé (42) qui est durci, le ruban préimprégné découpé comprenant des puces de fibres orientées de manière aléatoire (44) et une matrice de résine imprégnée dans les puces de fibres orientées de manière aléatoire.

2. Panneau résistant aux impacts de glace (36) selon la revendication 1, dans lequel le ruban préimprégné découpé (42) est durci par moulage par compression.

3. Panneau résistant aux impacts de glace (36) selon la revendication 2, dans lequel la feuille de surface (38) comprend une pluralité de plis (67) du ruban préimprégné découpé (42).

4. Panneau résistant aux impacts de glace (36) selon la revendication 3, dans lequel la pluralité de plis (67) comprend en outre au moins un pli d'un tissu préimprégné.

5. Panneau résistant aux impacts de glace (36) selon la revendication 4, dans lequel le tissu préimprégné comprend des fibres d'aramide tissées continues dans une résine époxy.

6. Panneau résistant aux impacts de glace (36) selon la revendication 3, dans lequel le ruban préimprégné découpé (42) a une épaisseur d'au moins 0,5 mm environ.

7. Panneau résistant aux impacts de glace (36) selon la revendication 3, dans lequel les fibres (44) dans le ruban préimprégné découpé (42) sont des fibres unidirectionnelles non continues.

8. Panneau résistant aux impacts de glace (36) selon la revendication 7, dans lequel les fibres unidirectionnelles non continues sont des fibres de carbone.

9. Panneau résistant aux impacts de glace (36) selon la revendication 7, dans lequel les fibres unidirectionnelles non continues comprennent des fibres choisies dans le groupe constitué des fibres de carbone, des fibres de verre, des fibres d'aramide, des fibres de bore, des fibres céramiques et des fibres polymères.

10. Panneau résistant aux impacts de glace (36) selon la revendication 7, dans lequel la matrice de résine dans le ruban préimprégné découpé (42) est une résine thermodurcie.

11. Panneau résistant aux impacts de glace (36) selon la revendication 10, dans lequel la résine thermodurcie est une résine époxy.

12. Panneau résistant aux impacts de glace (36) selon la revendication 3, dans lequel le panneau résistant aux impacts de glace est situé à l'arrière d'une soufflante (12) entourée par le carter de soufflante (18) et sur une surface intérieure du carter de soufflante.

13. Panneau résistant aux impacts de glace (36) selon la revendication 12, dans lequel l'âme en nid d'abeille et la feuille de surface sont liées à une surface intérieure du carter de soufflante (18) par un adhésif.

14. Moteur à turbine à gaz (10), comprenant :
une soufflante (12) ;
un carter de soufflante (18) entourant la soufflante ;
une section de compresseur (20) située en aval de la soufflante ;
une chambre de combustion (22) située en aval de la section de compresseur ;
une section de turbine (23) située en aval de la chambre de combustion ; et
un panneau résistant aux impacts de glace (36) selon l'une quelconque des revendications 1 à 11 ou 13 situé à l'arrière de la soufflante sur une surface intérieure du carter de soufflante.

15. Procédé de fabrication d'un panneau résistant aux impacts de glace (36) selon l'une quelconque des revendications 1 à 13, le procédé comprenant :
la fabrication de la feuille de surface (38) :
en empilant une pluralité de plis (67) d'un ruban préimprégné découpé (42) à une épaisseur souhaitée ;
en plaçant la pluralité de plis entre deux surfaces de moule ; et
en durcissant la pluralité de plis pour qu'ils prennent la forme de la feuille de surface par moulage par compression ; et
la formation du panneau résistant aux impacts de glace (36) comprenant la feuille de surface et l'âme en nid d'abeille.
